# FASCICULE DE BREVET EUROPEEN

(11) **EP 0 643 997 B1**
(45) Date de publication et mention de la délivrance du brevet: **25.11.1998**
(21) Numéro de dépôt: 94114014.7
(22) Date de dépôt: 07.09.1994
(51) Int. Cl.: B05D 3/06, C08J 7/04

(54) **Procédé de traitement des glaces en matière plastique**
Verfahren zur Behandlung von Kunststoffgläser
Process for treating synthetic glass

(30) Priorité: 17.09.1993 FR 9311105
(43) Date de publication de la demande: 22.03.1995
(73) Titulaire: VALEO VISION, 93000 Bobigny (FR)
(72) Inventeur: Chitarra, Salvatore, F-92160 Antony (FR); Pilache, Michel, F-95250 Beauchamp (FR); Teva, Daniel, 94 000 Creteil (FR)
(74) Mandataire: Lemaire, Marc

(56) Documents cités:
- EP-A- 0 471 079
- EP-A- 0 513 538
- FR-A- 2 313 118
- US-A- 4 018 939
- US-A- 4 879 176

## Description

La présente invention a pour objet un procédé de traitement destiné à rendre des glaces en matière plastique transparente, aptes à une utilisation en tant que glace de projecteur ou de feu de signalisation en particulier de véhicule.

Pour les applications précitées, les glaces en matière plastique transparente doivent subir un traitement les rendant insensibles ou, à tout le moins, résistantes à diverses agressions extérieures.

Il s'agit d'agressions mécaniques résultant de la collision de la glace avec différentes particules solides.

Il en résulte une abrasion de la glace plastique qui entraîne une dégradation des qualités de transmission de la lumière de la glace, ainsi que la création de diffractions parasites.

Il s'agit aussi d'agressions chimiques dues à différents facteurs susceptibles de provoquer des réactions chimiques avec la matière constituant ladite glace. De telles réactions chimiques peuvent être provoquées par l'humidité ambiante, par diverses pollutions atmosphériques, par les liquides de lavage, ainsi que par des projections d'huile ou de carburant.

Des transformations chimiques du matériau de la glace plastique peuvent également être initiées sous l'effet de l'exposition à certains rayonnements tels que les rayons ultraviolets.

Ces réactions chimiques ont pour conséquence d'entraîner des modifications de l'aspect de la glace et également une dégradation de ses facultés de transmission de la lumière.

Pour éviter les inconvénients ci-dessus, on a déjà proposé de protéger les glaces plastiques au moyen d'un revêtement protecteur.

Les revêtements protecteurs peuvent être classés en deux catégories selon la manière dont ils agissent.

La première catégorie est constituée par des vernis durs, résistant à l'abrasion, et formant un écran transparent protégeant la glace plastique contre toutes agressions mécaniques et chimiques.

Les vernis de cette catégorie sont en général formés à partir de composés silico-organiques ou acrylique, dont la résistance à l'abrasion et aux agressions chimiques se rapproche de celle du verre.

Ces vernis ont cependant l'inconvénient de présenter un coefficient de dilatation différent de celui de la glace plastique qu'ils protègent, si bien qu'il peut être nécessaire de prévoir entre le vernis et la glace plastique, une couche intermédiaire susceptible d'absorber les tensions mécaniques pouvant se produire lors de variations de température, comme c'est le cas pour les glaces des projecteurs de véhicules automobiles.

Les vernis de la deuxième catégorie sont des vernis dits auto-cicatrisants qui présentent la caractéristique de reformer d'eux-mêmes une surface parfaite après agression mécanique telle que rayure.

Les revêtements protecteurs formant vernis auto-cicatrisants sont en général formés à partir de compositions à base de polyuréthane.

C'est le cas du revêtement décrit dans la demande de brevet FR-A-2 677 657 déposée au nom de la Demanderesse, qui comprend une composition de revêtement formée d'un polyuréthane polyurée réticulé.

On a constaté que l'adhésion du revêtement protecteur sur la glace plastique était parfois insuffisante et ce malgré l'utilisation de procédés de traitement de surface de la glace tels que corona, flammage, plasma micro-ondes, préalablement au dépôt du revêtement protecteur.

Cela entraîne une dégradation rapide des caractéristiques de transmission optiques de la glace la rendant impropre à son usage.

Il est par ailleurs connu, notamment grâce au brevet US-A-4 018 939, un procédé de traitement d'une glace en matière plastique transparente qui consiste à soumettre la surface de ladite glace à un rayonnement ultraviolet, préalablement au dépôt d'un revêtement protecteur.

Le procédé selon l'invention est caractérisé en ce que le rayonnement ultraviolet est émis par des lampes sans électrode dont l'allumage est réalisé en les soumettant à l'action de micro-ondes générées par un magnéton.

L'homme du métier s'efforce de protéger la matière plastique d'une glace de projecteur ou de feu de signalisation de l'action des rayons utraviolets qui occasionnent un jaunissement de celle-ci.

A cet égard, on se reportera à la demande de brevet FR-A-2 677 657 précitée où il a été prévu d'incorporer au revêtement des agents stabilisants protégeant la glace contre les rayonnements ultraviolets.

Les tests effectués sur des glaces en polycarbonate ayant fait l'objet d'un traitement de surface conformément aux procédés connus précités et au procédé selon l'invention ont mis en évidence que le traitement selon l'invention permettait une activation plus en profondeur et plus durable du matériau plastique, permettant une meilleure adhésion du revêtement protecteur déposé à la suite du traitement de surface.

En particulier le caractère plus durable de l'activation est un facteur extrêmement important dès lors que les opérations d'activation et de revêtement ne peuvent pas être simultanées.

En choisissant des sources d'émission de rayons ultraviolets dont le spectre d'émission comporte majoritairement des longueurs d'ondes supérieures à 280 nm et de préférence dont plus de 50% de l'énergie émise correspond à des longueurs d'ondes comprises entre 280 et 380 nm, on a pu constater l'absence de jaunissement du polycarbonate.

De préférence le rayonnement ultraviolet est tel que l'énergie reçue pour la glace en matière plastique est comprise entre 2 et 14 J/cm².

Après le traitement de surface précité un revêtement protecteur du type de ceux indiqués en introduction est déposé sur la glace.

Avantageusement il s'agit d'un revêtement conforme à celui qui fait l'objet de la demande de brevet FR-A-2 677 657.

De préférence la matière de la glace est du polycarbonate.

D'autres caractéristiques et avantages de l'invention apparaîtront à la lecture de la description ci-après d'un exemple de mise en oeuvre de l'invention.

Des glaces de projecteurs de véhicules automobiles moulées en polycarbonate transparent du type commercialisé sous la référence "LES LS2/111" par la Société "GEP", sont placées sur le tapis d'un convoyeur de telle manière que la face de chacune, destinée à être placée à l'extérieur d'un projecteur soit accessible à un rayonnement lumineux.

Ledit tapis est admis à traverser un tunnel de traitement en franchissant un sas d'entrée puis, en sortie de tunnel, un sas de sortie.

La voûte du tunnel est garnie d'une batterie de lampes du type à mercure dopé avec des halogénures tels que notamment des halogénures de fer et de cobalt.

De telles lampes qui émettent des rayonnements ultraviolets sont commercialisées sous la référence "D" par la Société "FUSION UV CURING-SYSTEMS".

Elles sont plus particulièrement choisies, selon l'invention, en raison de leur spectre d'émission.

Les longueurs d'ondes émises sont moins riches dans la région des 280nm et 55% de l'énergie émise par le type de lampes choisies se trouve dans la région des rayons ultraviolets de type UVA et UVB entre 280 et 380nm.

Ces lampes présentent aussi l'avantage d'émettre très peu de rayons infrarouges et de ce fait ne provoquent pas un échauffement important des produits exposés.

De préférence, il s'agit de lampes sans électrodes dont l'allumage est réalisé en les soumettant à l'action de micro-ondes générés par un magnétron placé à l'extérieur du tunnel. Des guides d'ondes disposés de manière appropriée canalisent les micro-ondes à partir du magnétron et les distribuent en les focalisant sur lesdites lampes.

A cet effet, les lampes sont placées au foyer d'un réflecteur elliptique qui, en outre, permet d'orienter le rayonnement ultraviolet émis par chaque lampe.

En réglant individuellement l'orientation de chaque réflecteur, on réalise une distribution appropriée de l'énergie émise vers les glaces à traiter.

Le tunnel et les sas d'entrée et de sortie sont adaptés à empêcher toute fuite de rayonnements micro-ondes et ultraviolets vers l'extérieur.

Le nombre des lampes allumées, l'orientation des réflecteurs, l'intensité du rayonnement ultraviolet et la vitesse du tapis du convoyeur sont réglés de manière que l'énergie reçue par les glaces soit, de préférence, comprise entre 2 et 14 J/cm² ; la vitesse du tapis du convoyeur pouvant notamment varier entre 2 et 4,8 m /mn.

En sortie de tunnel, après le sas de sortie, les glaces sont récupérées pour être revêtues d'une couche protectrice telle que par exemple un polyuréthane - polyurée réticulé objet de la demande de brevet FR-A-2 677 657.

Afin de vérifier les performances du procédé selon l'invention, des échantillons ont été prélevés en sortie du tunnel et différentes mesures ont été réalisées.

On a tout d'abord mesuré la tension de surface pour la comparer à celle du polycarbonate non traité d'une part, et traité par un procédé classique (corona, flammage, plasma micro-ondes) d'autre part.

Les résultats sont les suivants :

| Polycarbonate | tension de surface dynes/cm |
|---|---|
| non traité | 40 |
| traitement classique | 42 |
| traitement selon l'invention | 54 |

On constate un accroissement très sensible de la tension de surface après traitement selon l'invention.

Il convient de noter que l'adhérence d'un revêtement protecteur est d'autant plus forte et durable que la tension de surface de la couche à revêtir est grande.

Ceci démontre les avantages de l'invention par rapport à l'état de la technique.

Des mesures de jaunissement ont été effectuées sur des échantillons prélevés en sortie du tunnel.

Une comparaison avec des valeurs correspondantes relevées sur les échantillons de polycarbonate non traité ne révèlent aucune altération sensible du matériau traité selon l'invention. Les performances optiques du matériau sont ainsi préservées contrairement à toute attente.

On a également constaté, et c'est encore un avantage important du procédé selon l'invention, que ce dernier n'altère pas les propriétés mécaniques du matériau traité, contrairement aux procédés antérieurs qui sont particulièrement agressifs.

On a ainsi pu comparer des échantillons de polycarbonate non traité et non revêtus (A), traités par le procédé selon l'invention (B) et revêtus d'une composition de polyuréthane-polyurée réticulé (C).

Les tests à la traction, effectués sur une machine "INSTRON 4301" avec des éprouvettes mesurant 150mm x 20mm x 4mm, ont donné les résultats suivants (moyennes) :

| | A | B | C |
|---|---|---|---|
| Contrainte au seuil en MPa | 61 | 65 | 66 |
| Allongement au seuil en % | 6,5 | 7 | 8 |

Les tests de résistance aux chocs, effectués sur une machine "ADAMEL-LHOMARGY 1342 (choc "Charpy") avec des éprouvettes mesurant 60mm x 20mm x 4mm ont procuré les résultats suivants (moyennes) :

| | A | B | C |
|---|---|---|---|
| Contrainte en kJ/m² | 129 | 127 | 129 |

Ceci démontre que les propriétés mécaniques du matériau formant les glaces de projecteur, ne sont pas altérées en utilisant le procédé de traitement selon l'invention ; ces propriétés sont même préservées après enduction de la glace d'une couche de revêtement protectrice.

On a également pu mettre en évidence que le traitement selon l'invention permettrait une activation plus en profondeur et plus durable du matériau plastique.

L'invention n'est pas limitée au traitement de glaces en polycarbonate. En particulier elle s'applique également au traitement de glaces en polyméthyl-métacrylate.

## Revendications

1. Procédé de traitement de glaces en matière plastique transparente consistant à soumettre la surface de chaque glace à un rayonnement ultraviolet préalablement au dépôt d'un revêtement protecteur, caractérisé en ce que le rayonnement ultraviolet est émis par des lampes sans électrode dont l'allumage est réalisé en les soumettant à l'action de micro-ondes générées par un magnétron.

2. Procédé selon la revendication 1, caractérisé en ce que lesdites glaces sont réalisées en polycarbonate.

3. Procédé selon la revendication 1 ou 2, caractérisé en ce que ledit rayonnement ultraviolet présente un spectre d'émission comportant majoritairement des longueurs d'ondes supérieures à 280nm.

4. Procédé selon la revendication 3, caractérisé en ce que plus de 50% de l'énergie émise correspond à des longueurs d'ondes comprises entre 280 et 380nm.

5. Procédé selon l'une quelconque des revendications précédentes, caractérisé en ce que des glaces sont placées sur le tapis d'un convoyeur admis à traverser, via un sas d'entrée et un sas de sortie, un tunnel dont la voûte est garnie d'une batterie desdites lampes.

6. Procédé selon la revendication 5, caractérisé en ce que lesdites lampes sont placées au foyer d'un réflecteur elliptique.

7. Procédé selon la revendication 5 ou 6, caractérisé en ce que le magnétron est placé à l'extérieur du tunnel.

8. Procédé selon la revendication 6, caractérisé en ce que le nombre de lampes allumées, l'orientation des réflecteurs, l'intensité du rayonnement ultraviolet et la vitesse du tapis du convoyeur sont réglés de telle sorte que l'énergie reçue par lesdites glaces est comprise entre 2 et 14 J/cm².

## Claims

1. A method of treating optical elements of transparent plastics material, consisting in subjecting the surface of each optical element to ultraviolet radiation before depositing a protective coating thereon, characterised in that the ultraviolet radiation is emitted by electrodeless lamps which are energised by subjecting them to the action of microwaves generated by a magnetron.

2. A method according to Claim 1, characterised in that the said optical elements are made of polycarbonate.

3. A method according to Claim 1 or Claim 2, characterised in that the said ultraviolet radiation has an emission spectrum in which wavelengths greater than 280 nm predominate.

4. A method according to Claim 3, characterised in that more than 50% of the energy emitted corresponds to wavelengths in the range between 280 and 380 nm.

5. A method according to any one of the preceding Claims, characterised in that the optical elements are placed on the carpet of a conveyor arranged to pass, via an entry screen and an exit screen, through a tunnel, the roof of which is furnished with a battery of the said lamps.

6. A method according to Claim 5, characterised in that the said lamps are located at the focus of an elliptical reflector.

7. A method according to Claim 5 or Claim 6, characterised in that the magnetron is located outside the tunnel.

8. A method according to Claim 6, characterised in that the number of lamps energised, the orientation of the reflectors, the intensity of the ultraviolet radiation, and the speed of travel of the carpet of the conveyor are regulated in such a way that the energy received by the said optical elements is in the range between 2 and 14 J/cm².

## Patentansprüche

1. Verfahren zur Behandlung von Gläsern aus transparentem Kunststoff, das darin besteht, daß die Oberfläche jedes Glases vor der Aufbringung der Schutzbeschichtung einer Ultraviolettstrahlung ausgesetzt wird , **dadurch gekennzeichnet**, daß die Ultraviolettstrahlung durch Lampen ohne Elektrode abgegeben wird, deren Zündung erfolgt, indem sie der Einwirkung von durch ein Magnetron erzeugten Mikrowellen ausgesetzt werden.

2. Verfahren nach Anspruch 1 , **dadurch gekennzeichnet,** daß die besagten Gläser aus Polycarbonat ausgeführt sind.

3. Verfahren nach Anspruch 1 oder 2 , **dadurch gekennzeichnet,** daß die besagte Ultraviolettstrahlung ein Emissionsspektrum aufweist, das zum größten Teil Wellenlängen über 280 nm enthält.

4. Verfahren nach Anspruch 3 , **dadurch gekennzeichnet,** daß mehr als 50 % der abgegebenen Energie Wellenlängen zwischen 280 und 380 nm entsprechen.

5. Verfahren nach einem der vorangehenden Ansprüche, **dadurch gekennzeichnet,** daß die Gläser auf ein Transportband gelegt werden, das über eine Eingangsschleuse und eine Ausgangsschleuse durch einen Tunnel laufen kann, dessen Gewölbe mit einer Batterie der besagten Lampen bestückt ist.

6. Verfahren nach Anspruch 5 , **dadurch gekennzeichnet,** daß die besagten Lampen im Brennpunkt eines elliptischen Reflektors angeordnet sind.

7. Verfahren nach Anspruch 5 oder 6 , **dadurch gekennzeichnet,** daß das Magnetron außerhalb des Tunnels angeordnet ist.

8. Verfahren nach Anspruch 6 , **dadurch gekennzeichnet,** daß die Anzahl der gezündeten Lampen, die Ausrichtung der Reflektoren, die Intensität der Ultraviolettstrahlung und die Geschwindigkeit des Transportbands so eingestellt werden, daß die auf die Gläser eintreffende Energie zwischen 2 und 14 J/cm² liegt
